# EUROPÄISCHE PATENTSCHRIFT

(11) **EP 1 008 505 B1**
(45) Veröffentlichungstag und Bekanntmachung des Hinweises auf die Patenterteilung: **11.09.2002**
(21) Anmeldenummer: 99121539.3
(22) Anmeldetag: 29.10.1999
(51) Int. Cl.: B62D 1/16, B60R 13/06, F16J 3/04

(54) **Dichtungsanordnung**
Sealing arrangement
Dispositif d'étanchéité

(30) Priorität: 12.12.1998 DE 19857392
(43) Veröffentlichungstag der Anmeldung: 14.06.2000
(73) Patentinhaber: DaimlerChrysler AG, 70567 Stuttgart (DE)
(72) Erfinder: Hebenstreit, Axel, 70569 Stuttgart (DE)

(56) Entgegenhaltungen:
- DE-U- 9 405 633
- GB-A- 2 251 039

## Beschreibung

Die Erfindung betrifft eine Dichtungsanordnung für eine durch eine Öffnung, insbesondere eine Wandöffnung in einem Kraftfahrzeug, geführte, relativ zu der Öffnung drehbar gelagerte und einen profilierten Oberflächenabschnitt aufweisende Welle mit einer an der Öffnung fixierten, die Welle umschließenden elastischen Manschette, die sich gegen die Welle über einen Stützring abstützt.

Aus der Patentschrift DE 29 32 317 C2 ist eine Abdichtung gemäß des oberbegriffs von dem Anspruch 1 für eine durch eine Wandöffnung geführte Welle bekannt, die ein scheibenförmiges Dichtelement aufweist, welches drehfest mit der Welle verbunden ist. Das scheibenförmige Dichtelement ist in-einem doppelwandigen, an der Wandöffnung angeordneten Aufnahmeraum untergebracht, wobei das Dichtelement stirnseitige Gleit- bzw. Dichtflächen aufweist, die in engem Kontakt mit den Innenseiten des Aufnahmeraumes stehen. Die Größe des Dichtelementes ist so gewählt, daß sich in jeder Winkellage der Welle eine vollständige Überlappung von Dichtelement und Wandöffnung ergibt, wobei die Welle exzentrisch zur Wandöffnung gelagert sein kann.

Aus dem Gebrauchsmuster DE 94 05 633 U1 ist ein Dichtelement für die Durchführung einer Lenksäule eines Kraftfahrzeuges durch eine Wandöffnung bekannt, das einen an der Wandöffnung fixierten Dichtkörper aufweist, in den eine Buchse eingesetzt ist, durch die die Lenksäule geführt ist.

Aus der Offenlegungsschrift DE 42 21 669 A1 ist eine Abdeckeinheit für eine Wandöffnung in einem Kraftfahrzeug vorgesehen, durch die eine Lenksäule geführt ist. Die Abdeckeinheit besteht im wesentlichen aus einer ersten Abdeckplatte, in die eine Dichtungs- und Führungshülse für die Lenksäule integriert ist und die von einer Seite derart auf die Wandöffnung aufgesetzt ist, daß die Führungshülse die Wandöffnung durchgreift. Von der anderen Seite ist eine Gegenplatte auf die Wandöffnung aufgesetzt und mit der Führungshülse verrastet.

Aus der Offenlegungsschrift DE 43 44 385 A1 ist eine Dichtungsanordnung für eine durch eine Wandöffnung geführte Lenksäule eines Kraftfahrzeuges bekannt, die aus einer die Wandöffnung umlaufenden Dichtlippe und einem diese tragenden Halteteil besteht. Das Halteteil sowie die Dichtlippe, die als ein Hohlwulst ausgebildet ist, sind an einem Mantelrohr der Lenksäule fixiert.

Aufgabe der Erfindung ist es, eine Dichtungsanordnung der eingangs genannten Art zu schaffen, die eine besonders gute Abdichtung der Wandöffnung und die Verwendung von Wellen mit einem beliebig profilierten Oberflächenabschnitt ermöglichen.

Diese Aufgabe wird erfindungsgemäß dadurch gelöst, daß dem Stützring innenseitig ein elastischer Dichtmantel zugeordnet ist, mittels dessen der Stützring drehfest auf der Welle angeordnet ist, und daß der Stützring außenseitig eine zylindrische Gleitfläche aufweist, auf der die elastische Manschette gelagert ist. Dabei ist der Dichtmantel flexibel und so weit elastisch deformierbar gestaltet, daß er sich an die Profilierung des Oberflächenabschnitts der Welle anpaßt und die Welle dichtend umgibt. Der Stützring preßt den Dichtmantel selbsthemmend gegen die Welle und stellt eine Außenoberfläche zur Verfügung, auf der die Manschette gleiten kann, wenn die Welle rotiert. Dazu ist vorgesehen, den Stützring mit einer geringen Formtoleranz hinsichtlich der Rundheit und guten Gleiteigenschaften an seiner Außenoberfläche auszustatten. Durch die vorgeschlagene Anordnung kann sowohl eine gute Abdichtung der von der Welle durchsetzten Öffnung, als auch ein Ausgleich von Formtoleranzen der Welle erzielt werden. Mit Hilfe der vorgeschlagenen Dichtungsanordnung lassen sich auch unrunde Wellen abdichten.

In Ausgestaltung der Erfindung weist der Stützring einen wenigstens bereichsweise elastisch aufspreizbaren Klemmringabschnitt auf, dem der elastische Dichtmantel zugeordnet ist, und es ist ein lösbar mit dem Klemmringabschnitt verbindbarer Gleitringabschnitt vorgesehen, der mit der zylindrischen Gleitfläche versehen ist. Der Klemmringabschnitt ist in seinem elastisch aufspreizbaren Bereich elastisch zusammendrückbar, so daß der Gleitringabschnitt auf den Klemmringabschnitt aufgeschoben und radial verspannt werden kann, wobei der Dichtmantel mit einem mit dem elastisch aufspreizbaren Bereich des Klemmringabschnitts korrespondierenden Abschnitt fest gegen die Welle gedrückt wird.

In weiterer Ausgestaltung der Erfindung ist der Klemmringabschnitt, insbesondere in seinem elastisch aufspreizbaren Bereich, mit einem oder mehreren Längsschlitzen versehen. Dadurch wird ein besonders hoher reversibler Deformationsgrad des Klemmringabschnitts erreicht.

In weiterer Ausgestaltung der Erfindung ist der Dichtmantel fest mit dem Klemmringabschnitt verbunden und weist in einem mit dem elastisch aufspreizbaren Bereich des Klemmringabschnitts korrespondierenden Abschnitt eine innenseitige Verengung auf. Der vorzugsweise aus einem elastomeren Kunststoff hergestellte Dichtmantel ist stoffschlüssig, insbesondere durch Kleben, Schweißen oder Anspritzen mit dem Klemmringabschnitt verbunden. Die Verengung wird durch eine vorzugsweise ballige oder konisch verengte Innenoberfläche gebildet, wobei vorzugsweise eine in diesem Bereich erhöhte Wandstärke des Dichtmantels vorgesehen ist. Bei einem Aufschieben der aus dem Dichtmantel und dem Klemmringabschnitt bestehenden Einheit auf die Welle werden beide Elemente elastisch gedehnt, so daß sie selbsttätig auf der Welle klemmen.

In weiterer Ausgestaltung der Erfindung weisen der Klemmringabschnitt, insbesondere in seinem elastisch aufspreizbaren Bereich eine konische Außenkontur und der Gleitringabschnitt, insbesondere in einem zu dem elastisch aufspreizbaren Bereich des Klemmringabschnitts korrespondierenden Bereich, eine an die Außenkontur des Klemmringabschnitts angepaßte konische Innenkontur auf. Damit ergibt sich eine selbsthemmende reibschlüssige Klemmverbindung längs einer schrägen Kegelfläche, die je nach axialer Aufschieblänge von Klemmring- und Gleitringabschnitt einen Toleranzausgleich ermöglicht.

In weiterer Ausgestaltung der Erfindung sind zwischen Gleitringabschnitt und Klemmringabschnitt ineinandergreifende Rastelemente, insbesondere korrespondierende Verzahnungen, angeordnet. Damit wird eine einfache, zuverlässige Rastverbindung realisiert.

In weiterer Ausgestaltung der Erfindung weisen der Gleitringabschnitt ein Innengewinde und der Klemmringabschnitt ein korrespondierendes Außengewinde auf. Dadurch wird eine besonders zuverlässige Schraubverbindung realisiert, wobei in axialer Richtung die Gewindeabschnitte Rastelemente darstellen.

In weiterer Ausgestaltung der Erfindung weist der Klemmringabschnitt einen steifen, ringförmigen Flansch auf. Der radial abragende Flansch dient zur Versteifung des Klemmringabschnitts und als Anschlagfläche für den aufgeschobenen Gleitringabschnitt.

Weitere Vorteile und Merkmale der Erfindung ergeben sich aus den Ansprüchen sowie aus der nachfolgenden Beschreibung, in der ein bevorzugtes Ausführungsbeispiel der Erfindung anhand der Zeichnungen dargestellt ist.
- Fig. 1: zeigt in einer schematischen Querschnittsdarstellung eine durch eine Wandöffnung geführte Lenkspindel eines Personenkrartwagens mit einer erfindungsgemäßen Dichtungsanordnung zur Abdichtung der Wandöffnung,
- Fig. 2: in einer perspektivischen Ansicht einen Klemmring der Dichtungsanordnung gemäß Fig. 1,
- Fig. 3: in einer perspektivischen Ansicht einen Gleitring der Dichtungsanordnung gemäß Fig. 1,
- Fig. 4: in einem Querschnitt entlang der Linie IV-IV den Klemmring gemäß Fig. 2 und
- Fig. 5: in einem Querschnitt entlang der Linie V-V den Gleitring gemäß Fig. 3.

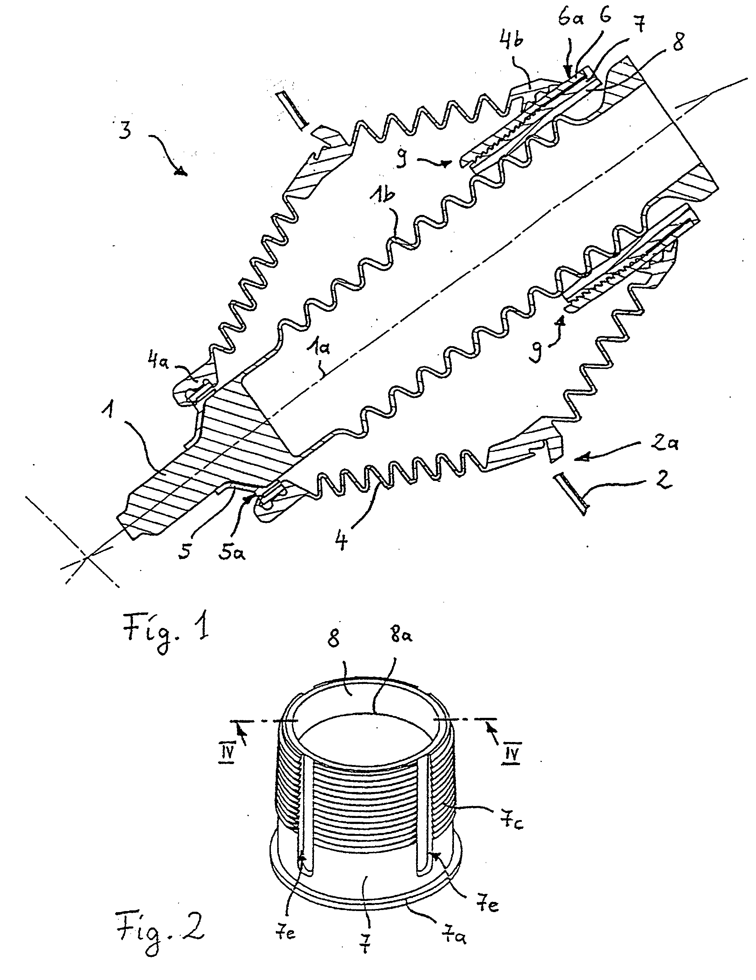

In Fig. 1 ist eine Längsspindel 1 eines Personenkraftwagens dargestellt, die durch eine Querwand 2 zwischen Motorraum und Fahrgastzelle geführt ist. Dazu weist die Querwand 2 eine Öffnung 2a auf, die von einer erfindungsgemäßen Dichtungsanordnung 3 verschlossen ist.

Die Lenkspindel 1 beinhaltet einen als Wellrohr gestalteten Abschnitt 1b, der durch seine Wellung eine in Umfangsrichtung der Lenkspindel 1 profilierte Außenoberfläche aufweist. Die Lenkspindel 1 ist in nicht dargstellter Weise um ihre Hauptachse 1a drehbar gelagert und wird von einer ein wesentliches Bauteil der Dichtungsanordnung 3 bildenden Manschette in Form eines Faltenbalges 4 umgeben, der drehfest an der Querwand 2 fixiert ist. Der Faltenbalg 4 besteht vorzugsweise aus einem gut elastisch verformbaren Kunststoff oder aus Gummi und stützt sich federnd mit seinen Endbereichen 4a und 4b an wellenseitigen Gleitflächen 5a und 6a ab. Dazu sind in den Endbereichen 4a und 4b nicht näher bezeichnete, ringförmige Dichtlippen ausgebildet, an denen sich die Gleitflächen 5a und 6a entlangbewegen. Die Gleitfläche 5a befindet sich an der Außenseite eines auf die Lenkspindel 1 drehfest aufgesetzten Führungsrings 5, während die Gleitfläche 6a an der Außenseite einer wie folgt aufgebauten Dichtungseinheit 9 angeordnet ist.

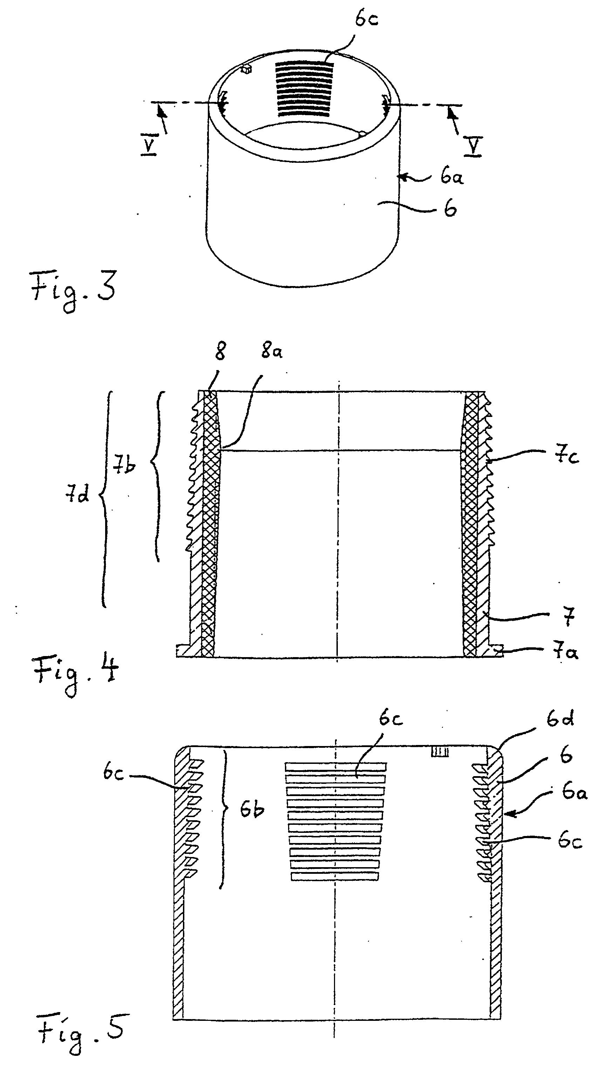

Die Dichtungseinheit 9 umschließt die Lenkspindel 1 vollständig und ist drehfest mit dieser verbunden. Sie besteht aus einem Stützring 6, 7 sowie einem Dichtmantel 8, wobei der Stützring 6, 7 wiederum in einen als selbständiger Gleitring ausgeführten außenliegenden Gleitringabschnitt 6 und einen als selbständiger Klemmring ausgeführten innenliegenden Klemmringabschnitt 7 unterteilt ist. Die zylindrische Außenoberfläche des Gleitrings 6, der im Detail in den Fig. 3 und 5 dargestellt ist, bildet die Gleitfläche 6a. Der Gleitring 6 ist weitgehend steif ausgeführt und vorzugsweise aus einem Polyacetalharz (POM) oder Polytetrafluorethylen (PTFE) mit günstigem Gleit- und Verschleißverhalten hergestellt. Er weist in einem vorderen Abschnitt 6b eine sich zum Ringende hin verengende konische Innenkontur sowie ein aus vier korrespondierenden Teilen bestehendes Innengewinde 6c auf. Die vordere Außenkante des Gleitrings 6 ist ferner mit einem ausgedehnten Radius 6d versehen.

Der Gleitring 6 ist auf den in den Fig. 2 und 4 dargestellten Klemmring 7 aufgeschraubt, der ein zu dem Innengewinde 6c des Gleitrings korrespondierendes Außengewinde 7c aufweist. Das Außengewinde 7c ist in einem vorderen Abschnitt 7b angeordnet, in dem der Klemmring 7 eine konische Außenkontur aufweist, an die die konische Innenkontur des Gleitrings 6 angepaßt ist. Der Klemmring 7 weist ferner einen ausgedehnten, elastisch aufspreizbaren Bereich 7d auf, in dem er mit Längsschlitzen 7e versehen ist. Der elastisch aufspreizbare Bereich 7d erstreckt sich über einen Großteil der Länge des Klemmrings 7 und geht rückseitig in einen steifen Abschnitt über, in dem an dem Klemmring 7 ein steifer, zylindrischer Flansch 7a vorgesehen ist. Der Flansch 7a dient einerseits zur Stabilisierung des Klemmrings und andererseits als Anschlagfläche für den aufgeschraubten Gleitring 6. Der Klemmring 7 besteht vorzugsweise aus einem zähen und elastischen Kunststoff, wie Polypropylen (PP).

Innenseitig weist der Klemmring 7 eine zylindrische Bohrung auf, in die der Dichtmantel 8 aus einem thermoplastischen Elastomer (TPE) eingesetzt ist. Der Dichtmantel 8 erstreckt sich über die gesamte Länge des Klemmrings 7 und ist vorzugsweise stoffschlüssig, insbesondere durch Anspritzen, Anvulkanisieren oder Kleben mit dem Klemmring verbunden. Der Dichtmantel 8 weist in einem mit dem elastisch aufspreizbaren Bereich 7d des Klemmrings 7 korrespondierenden Abschnitt eine innenseitige Verengung auf, die durch eine von den Enden des Dichtmantels 8 bis zu einem Scheitel 8a kontinuierlich zunehmende Wandstärke des Dichtmantels 8 realisiert ist.

Zur Montage der aus Gleitring 6, Klemmring 7 und Dichtmantel 8 bestehenden Dichtungseinheit 9 wird zunächst das aus Klemmring 7 und Dichtmantel 8 bestehende Bauteil auf den profilierten Wellrohrabschnitt 1b der Lenkspindel 1 geschoben, wobei der maximale Durchmesser des Wellrohrabschnitts 1b in etwa dem größen Innendurchmesser des Dichtmantels 8 entspricht. Daher werden Klemmring 7 und Dichtmantel 8 infolge der verengten Gestaltung des Dichtmantels 8 beim Aufschieben auf die Lenkspindel 1 und insbesondere auf den Wellrohrabschnitt 1b elastisch aufgeweitet. Wenn sich der Klemmring 7 samt Dichtmantel 8 in der richtigen Position auf der Lenkspindel 1 befinden, wird der Gleitring 6 auf den Klemmring 7 aufgeschraubt, wobei der elastisch aufspreizbare Bereich 7d des Klemmrings 7 sowie der Dichtmantel 8 zusammengedrückt und gegen die Lenkspindel 1 gepreßt werden. Dabei greift der Dichtmantel 8 in die Profilierungen des Wellrohrabschnitts 1b ein, wobei er sich entsprechend verformt und an die Kontur der Profilierungen anpaßt. Der Gleitring 6 wird so weit wie erforderlich auf den Klemmring 7 aufgeschraubt, wobei ein selbsthemmendes Gewinde 6c, 7c ein selbsttätiges Lösen der Schraubverbindung verhindert. Nachfolgend läßt sich der Endbereich 4b des Faltenbalgs 4 über den Radius 6d auf die Gleitfläche 6a schieben, auf der die Dichtlippen des Faltenbalgs 4 bei einem Drehen der Lenkspindel 1 einschließlich der Dichtungseinheit 9 automatisch ihre geeignete Position einnehmen können.

Die vorgeschlagene Dichtungseinheit 9 ist auf unterschiedlich profilierten und mit Toleranzen von bis zu wenigstens 1,5 mm behafteten Lenkspindeln 1 montierbar, wobei sie eine vollständige Abdichtung zwischen Lenkspindel und Faltenbalg 4 ermöglichen. Dadurch wird nicht nur ein Stoff- sondern auch ein Schalldurchgang weitgehend vermieden. Die Dichtungseinheit 9 ist auf einfache Weise, gegebenenfalls auch automatisiert, montierbar und demontierbar. Durch eine geeignete Werkstoffwahl und geringe Formtoleranzen werden Geräusche zwischen der Dichtungseinheit 9 und dem Faltenbalg 4 weitgehend vermieden. Bei einer günstigen Positionierung des Faltenbalgs 4 gegenüber der Dichtungseinheit 9 positioniert sich der Endbereich 4b bei einem Drehen der Lenkspindel 1 selbsttätig auf der Gleitfläche 6a.

In einem modifizierten Ausführungsbeispiel der Erfindung sind zwischen Gleitring 6 und Klemmring 7 anstelle des Gewindes 6c, 7c mehrere, wenigstens in axialer Richtung wirksame Rastelemente vorgesehen, die ein Lösen der Verbindung zwischen Gleitring und Klemmring verhindern und diese axial gegeneinander festlegen.

In einem weiteren modifizierten Ausführungsbeispiel der Erfindung sind die konischen Kontaktflächen zwischen dem Gleitring 6 und dem Klemmring 7 derart gestaltet, daß sich beim Aufeinanderschieben eine selbsthemmende Klemmverbindung ergibt und somit auf ein Gewinde oder Rastelemente zwischen Gleitring und Klemmring verzichtet werden kann. Dabei ist insbesondere auf Seiten des Gleitrings eine außenseitige, günstige Reibungseigenschaften aufweisende Oberflächenbeschichtung vorsehbar.

In einem weiteren modifizierten Ausführungsbeispiel der Dichtungsanordnung 3 ist der Dichtmantel 8 direkt in den Gleitring 6 eingesetzt, wobei auf den Klemmring 7 verzichtet wird.

## Patentansprüche

1. Dichtungsanordnung für eine durch eine Öffnung, insbesondere eine Wandöffnung in einem Kraftfahrzeug, geführte, relativ zu der Öffnung drehbar gelagerte und einen profilierten Oberflächenabschnitt aufweisende Welle mit
- einer an der Öffnung fixierten, die Welle (1) umschließenden elastischen Manschette (4), die sich gegen die Welle (1) über einen Stützring (6,7) abstützt,
**dadurch gekennzeichnet, daß**
- dem Stützring (6, 7) innenseitig ein elastischer Dichtmantel (8) zugeordnet ist, mittels dessen der Stützring (6, 7) drehfest auf der Welle (1) angeordnet ist, und daß
- der Stützring (6, 7) außenseitig eine zylindrische Gleitfläche (6a) aufweist, auf der die elastische Manschette (4) gelagert ist.

2. Dichtungsanordnung nach Anspruch 1,
**dadurch gekennzeichnet**, d a ß
der Stützring (6, 7) einen wenigstens bereichsweise elastisch aufspreizbaren Klemmringabschnitt (7) aufweist, dem der elastische Dichtmantel (8) zugeordnet ist, und daß ein lösbar mit dem Klemmringabschnitt (7) verbindbarer Gleitringabschnitt (6) vorgesehen ist, der mit der zylindrischen Gleitfläche (6a) versehen ist.

3. Dichtungsanordnung nach Anspruch 2,
**dadurch gekennzeichnet, daß**
der Klemmring, abschnitt (7), insbesondere in seinem elastisch aufspreizbaren Bereich (7d) mit einem oder mehreren Längsschlitzen (7e) versehen ist.

4. Dichtungsanordnung nach Anspruch 3,
**dadurch gekennzeichnet, daß**
der Dichtmantel (8) fest mit dem Klemmringabschnitt (7) verbunden ist und in einem mit dem elastisch aufspreizbaren Bereich (7d) des Klemmringabschnitts (7) korrespondierenden Abschnitt eine innenseitige Verengung (8a) aufweist.

5. Dichtungsanordnung nach Anspruch 2,
**dadurch gekennzeichnet, daß**
der Klemmringabschnitt (7), insbesondere in seinem elastisch aufspreizbaren Bereich (7d), eine konische Außenkontur und der Gleitringabschnitt (6), insbesondere in einem zu dem elastisch aufspreizbaren Bereich (7d) des Klemmringabschnitts (7) korrespondierenden Abschnitt, eine an die Außenkontur des Klemmringabschnitts (7) angepaßte konische Innenkontur aufweist.

6. Dichtungsanordnung nach Anspruch 2,
**dadurch gekennzeichnet, daß**
zwischen Gleitringabschnitt (6) und Klemmringabschnitt (7) axial formschlüssig ineinandergreifende Rastelemente, insbesondere korrespondierende Verzahnungen (6c, 7c), angeordnet sind, mittels derer der Gleitringabschnitt (6) und der Klemmringabschnitt (7) axial gegeneinander fixierbar sind.

7. Dichtungsanordnung nach Anspruch 2,
**dadurch gekennzeichnet, daß**
der Gleitringabschnitt (6) ein Innengewinde (6c) und der Klemmringabschnitt (7) ein korrespondierendes Außengewinde (7c) aufweisen.

8. Dichtungsanordnung nach Anspruch 2,
**dadurch gekennzeichnet, daß**
der Klemmringabschnitt (7) einen steifen, ringförmigen Flansch (7a) aufweist.

9. Dichtungsanordnung nach Anspruch 1,
**dadurch gekennzeichnet, daß**
die Manschette (4) als eine Querwand (2) zwischen einem Motorraum und einer Fahrgastzelle eines Kraftfahrzeuges durchgreifender sowie eine als Lenkspindelabschnitt ausgeführte Welle (1) umschließender Faltenbalg gestaltet ist.

## Claims

1. Seal arrangement for a shaft having a section with a profiled surface and inserted through an opening, in particular a wall opening in a motor vehicle, mounted so as to rotate relative to the opening, having
- an elastic sleeve (4) secured to the opening and enclosing the shaft (1), which is supported on the shaft (1) by means of a supporting ring (6, 7),
**characterised in that**
- an elastic seal casing (8) is provided on the internal face of the supporting ring (6, 7), by means of which the supporting ring (6, 7) is arranged on the shaft (1) so that it can not rotate and
- the supporting ring (6, 7) has, externally, a cylindrical bearing surface (6a), on which the elastic sleeve (4) is mounted.

2. Seal arrangement as claimed in claim 1,
**characterised in that**
the supporting ring (6, 7) has an elastically expandable clamping ring portion (7), at least in certain regions, with which the elastic seal casing (8) co-operates, and **in that** a bearing ring section (6), releasably connected to the clamping ring section (7), is provided, which has the cylindrical bearing surface (6a).

3. Seal arrangement as claimed in claim 2,
**characterised in that**
the clamping ring section (7) is provided with one or more longitudinal slits (7e), in particular in its elastically expandable region (7d).

4. Seal arrangement as claimed in claim 3,
**characterised in that**
the seal casing (8) is permanently joined to the clamping ring section (7) and has a narrowed section (8a) on the internal face in a section corresponding to the elastically expandable region (7d) of the clamping ring section (7).

5. Seal arrangement as claimed in claim 2,
**characterised in that**
the clamping ring section (7) has a conical external contour, in particular in its elastically expandable region (7d), and the bearing ring section (6) has a conical internal contour matching the external contour of the clamping ring section (7), in particular in a section corresponding to the elastically expandable region (7d) of the clamping ring section (7).

6. Seal arrangement as claimed in claim 2,
**characterised in that**
snap-fit elements axially engaging in one another in a positive fit are provided between bearing ring section (6) and clamping ring section (7), in particular matching teeth (6c, 7c), by means of which the bearing ring section (6) and the clamping ring section (7) can be axially fixed on one another.

7. Seal arrangement as claimed in claim 2,
**characterised in that**
the bearing ring section (6) has an internal thread (6c) and the clamping ring section (7) a matching external thread (7c).

8. Seal arrangement as claimed in claim 2,
**characterised in that**
the clamping ring section (7) has a rigid, annular flange (7a).

9. Seal arrangement as claimed in claim 1,
**characterised in that**
the sleeve (4) is provided in the form of a bellows enclosing a shaft (1) provided as a steering wheel shaft section, projecting through a transverse wall (2) between an engine compartment and a passenger compartment of a motor vehicle.

## Revendications

1. Dispositif d'étanchéité pour un arbre guidé dans une ouverture, notamment une ouverture de paroi dans un véhicule automobile, et monté de manière à pouvoir tourner par rapport à l'ouverture et possédant un tronçon de surface profilé, comportant
- un manchon élastique (4), qui est fixé à l'ouverture, entoure l'arbre (1) et prend appui contre l'arbre (1) au moyen d'une bague d'appui (6, 7),
**caractérisé en ce que**
- à la bague d'appui (6, 7) est associée, côté intérieur, une enveloppe d'étanchéité élastique (8), à l'aide de laquelle la bague d'appui (6, 7) est montée d'une manière bloquée en rotation sur l'arbre (1), et que
- la bague d'appui (6, 7) possède, côté extérieur, une surface cylindrique de glissement (6a), sur laquelle est monté le manchon élastique (4).

2. Dispositif d'étanchéité selon la revendication 1, **caractérisé en ce que** la bague d'appui (6, 7) possède une partie formant bague de serrage (7) pouvant être élargie élastiquement au moins par endroits et à laquelle est associée l'enveloppe d'étanchéité élastique (8), et qu'il est prévu une partie formant bague de glissement (6) pouvant être reliée de façon amovible à la partie formant bague de serrage (7) et qui est pourvue de la surface cylindrique de glissement (6a).

3. Dispositif d'étanchéité selon la revendication 2, **caractérisé en ce que** la partie formant bague de serrage (7) comporte, notamment dans sa zone pouvant être élargie élastiquement (7d), une ou plusieurs fentes longitudinales (7e).

4. Dispositif d'étanchéité selon la revendication 3, **caractérisé en ce que** l'enveloppe d'étanchéité (8) est reliée de façon fixe à la partie formant bague de serrage (7) et comporte un rétrécissement côté intérieur (8a) dans une partie qui correspond à la zone pouvant être élargie élastiquement (7d) de la partie formant bague de serrage (7).

5. Dispositif d'étanchéité selon la revendication 2, **caractérisé en ce que** la partie formant bague de serrage (7) comporte, notamment dans sa zone pouvant être élargie élastiquement (7d), un contour extérieur conique, et la partie formant bague de glissement (7) comporte, notamment dans une partie correspondant à la zone pouvant être élargie élastiquement (7d) de la partie formant bague de serrage (7), un contour intérieur conique adapté au contour extérieur de la partie formant bague de serrage (7).

6. Dispositif d'étanchéité selon la revendication 2, **caractérisé en ce qu'**entre la partie formant bague de glissement (6) et la partie formant bague de serrage (7) sont disposé des éléments d'encliquetage, qui engrènent axialement entre eux selon une liaison par formes complémentaires, notamment des dentures correspondantes (6c, 7c), à l'aide desquels la partie formant bague de glissement (6) et la partie formant bague de serrage (7) peuvent être fixées axialement l'une par rapport à l'autre.

7. Dispositif d'étanchéité selon la revendication 2, **caractérisé en ce que** la partie formant bague de glissement (6) possède un taraudage (6c) et la partie formant bague de serrage (7) possède un filetage correspondant (7c).

8. Dispositif d'étanchéité selon la revendication 2, **caractérisé en ce que** la partie (7) formant bague de serrage comporte une bride rigide de forme annulaire (7a).

9. Dispositif d'étanchéité selon la revendication 1, **caractérisé en ce que** le manchon (4) est agencé sous la forme d'un soufflet qui traverse une paroi transversale (2) entre un espace moteur et une cellule formant habitacle d'un véhicule automobile et qui entoure un arbre (1) agencé sous la forme d'un tronçon de broche de direction.
